# EUROPÄISCHE PATENTANMELDUNG

(11) **EP 3 933 633 A1**
(43) Veröffentlichungstag der Anmeldung: **05.01.2022**
(21) Anmeldenummer: 20183092.4
(22) Anmeldetag: 30.06.2020
(51) Int. Cl.: G06F 21/62, H04L 29/06

(54) **ANONYMISIERTES BEREITSTELLEN EINES DIENSTES**

(71) Anmelder: Siemens Aktiengesellschaft, 80333 München (DE)
(72) Erfinder: Cuellar, Jorge, 82065 Baierbrunn (DE); Hammer, Jan Hendrik, 59558 Lippstadt (DE); Stijohann, Jan, 59558 Lippstadt (DE)

(57) **Zusammenfassung**

Verfahren zum anonymisierten Bereitstellen eines Dienstes, bei dem Information (Notif) zu mindestens einem zu überwachenden Objekt (Ix) von einer Dienstvermittlervorrichtung (23) an eine Nutzervorrichtung (21) übermittelt wird und lediglich die Nutzervorrichtung (21) gleichzeitig eine Nutzeridentität (IdK) und das mindestens eine zu überwachende Objekt (Ix) kennt, umfassend
Anfordern (A1) der Information (Notif) zu mindestens einem zu überwachenden Objekt (Ix) durch die Nutzervorrichtung (21) bei der Dienstvermittlervorrichtung (23) mittels einer Anforderungsnachricht, die die Nutzeridentität (IdK) des Nutzers (K), einen Dienst-Berechtigungsnachweis (Tok) und eine von der Nutzervorrichtung (21) generierte zufällige kryptografische Sicherheitsinformation (PK) enthält und an eine Anonymisierungsvorrichtung (22) übermittelt wird,
Anonymes Übermitteln (A2) der Anforderungsnachricht ohne Nutzeridentität von der Anonymisierungsvorrichtung (22) an die Dienstvermittlervorrichtung (23),
Prüfen (A3) des Dienst-Berechtigungsnachweises (Tok) durch die Dienstvermittlervorrichtung (23), und bei einem positiven Prüfergebnis, Abrufen (A4) der Information (Notif) durch die Dienstvermittlervorrichtung (23) bei einer Diensterbringervorrichtung (24), Verschlüsseln (A5) der Information (Notif) mit der kryptografischen Sicherheitsinformation (PK) und Übermitteln (A6) der verschlüsselten Information (Notif) von der Dienstvermittlervorrichtung (23) über die Anonymisierungsvorrichtung (22) an die Nutzervorrichtung (21).

## Beschreibung

Die Erfindung betrifft ein Verfahren, eine Dienstvermittlervorrichtung sowie eine Anordnung zum anonymisierten Bereitstellen eines Dientes, bei der Information zu mindestens einem zu überwachenden Objekt von einer Dienstvermittlervorrichtung an einen Nutzer übermittelt wird und lediglich der Nutzer gleichzeitig eine Nutzeridentität und das mindestens eine zu überwachende Objekt kennt.

Es gibt Dienste, die Informationen in einer Datenbank sammeln und diese einem Kunden bzw. Nutzer des Dienstes auf Anfrage bereitstellen, bei denen der Kunde jedoch nicht möchte, dass der Dienstanbieter weiß, welche Informationen er genau sucht bzw. abruft. Ein Beispiel für einen solchen Dienst ist ein Schwachstellenanalysedienst, wie nachfolgend beschrieben.

Digitale Vorrichtungen oder Produkte enthalten eine Vielzahl von Softwarekomponenten, die die Funktionalität der Vorrichtung steuert oder auch Dienste bereitstellt. Eine große Herausforderung ist es, stets den Überblick über den Sicherheitsstand und notwendige Sicherheitsupdates der einzelnen Softwarekomponenten zu behalten. Da in vielen Produkten die gleichen Softwarekomponenten enthalten sind, ist es sinnvoll ein zentrales Informationssystem durch einen Dienstanbieter zu betreiben und so Synergieeffekte nutzen zu können. Noch effizienter ist es, wenn auch über Unternehmensgrenzen hinweg das gleiche Informationssystem genutzt wird.

Allerdings scheuen viele Unternehmen und Nutzer davor zurück, zentrale Schwachstelleninformationsdienste eines Drittanbieters in Anspruch zu nehmen, da dem Anbieter dadurch die verbauten Softwarekomponenten offengelegt werden müssen, dies aber eine vertrauliche Information darstellt. Ein solches Unternehmen möchte somit nicht, dass dem Anbieter eines solchen Informationsdienstes die Information über die verbauten Softwaremodule bekannt wird.

Bisher haben Nutzer entweder dem Anbieter des Informationsdienstes voll vertrauen müssen oder einen eigenen internen Informationsdienst aufgebaut und genutzt.

Es ist die Aufgabe der Erfindung, Informationen zu bestimmten Objekten von einem Dritten, beispielsweise einem Dienstanbieter bereitstellen zu lassen, ohne dass der Dienstanbieter oder eine sonstige in die Diensterbringung involvierte Stelle die zu überwachenden Objekte dem einzelnen Nutzer zuordnen kann.

Die Aufgabe wird durch die in den unabhängigen Ansprüchen beschriebenen Maßnahmen gelöst. In den Unteransprüchen sind vorteilhafte Weiterbildungen der Erfindung dargestellt.

Ein erster Aspekt der Erfindung betrifft ein Verfahren zum anonymisierten Bereitstellen eines Dienstes, bei dem Informationen zu zumindest einem zu überwachenden Objekt von einer Dienstvermittlervorrichtung an eine Nutzervorrichtung übermittelt wird und lediglich die Nutzervorrichtung gleichzeitig eine Nutzeridentität und das zumindest eine zu überwachende Objekt kennt, umfassend
- Anfordern der Information zu zumindest einem zu überwachenden Objekt durch die Nutzervorrichtung bei der Dienstvermittlervorrichtung mittels einer Anforderungsnachricht, die die Nutzeridentität des Nutzers, einen Dienst-Berechtigungsnachweis und eine von der Nutzervorrichtung generierte zufällige kryptografische Sicherheitsinformation enthält und an eine Anonymisierungsvorrichtung übermittelt wird,
- Anonymes Übermitteln der Anforderungsnachricht ohne Nutzeridentität von der Anonymisierungsvorrichtung an die Dienstvermittlervorrichtung,
- Prüfen des Dienst-Berechtigungsnachweises durch die Dienstvermittlervorrichtung, und bei einem positiven Prüfergebnis
- Abrufen der Informationen durch die Dienstvermittlervorrichtung bei einer Diensterbringervorrichtung,
- Verschlüsseln der Informationen mit der kryptografischen Sicherheitsinformation und Übermitteln der verschlüsselten Informationen von der Dienstvermittlervorrichtung über den Anonymisierungsvorrichtung an die Nutzervorrichtung.

Durch das anonyme Übermitteln der Anforderungsnachricht wird die Nutzeridentität bei der Übertragung der Anforderungsnachricht von der Anonymisierungsvorrichtung entfernt, sodass die Dienstvermittlervorrichtung zwar die zu überwachenden Objekte, jedoch nicht die Identität der anfragenden Nutzervorrichtung kennt. Durch das Prüfen des DienstBerechtigungsnachweises wird sichergestellt, dass die Nutzervorrichtung, die den Token übermittelt hat, zum Anfordern der Informationen berechtigt ist. Durch das Verschlüsseln der abgerufenen Informationen mit dem von der Nutzervorrichtung generierten zufälligen kryptografischen Sicherheitsinformation wird sichergestellt, dass lediglich die Nutzervorrichtung selbst die an sie gerichtete Information lesen kann. Dadurch kann auch auf dem Übertragungsweg von der Dienstvermittlervorrichtung an die Nutzervorrichtung keine Zuordnung zwischen den zu überwachenden Objekten und der Nutzervorrichtung ermittelt werden. Somit lässt sich in keiner der involvierten Vorrichtungen noch auf den Kommunikationsverbindungen eine Zuordnung zwischen der Nutzervorrichtung und den zu überwachenden Objekten herstellen.

In einer vorteilhaften Ausführungsform wird der Dienst-Berechtigungsnachweis als Antwort auf eine Registrierungsanfrage der Nutzervorrichtung von der Dienstvermittlervorrichtung erzeugt und an die Nutzervorrichtung übermittelt.

Der Dienst-Berechtigungsnachweis kann weitere Informationen und Details zur Berechtigung der Nutzervorrichtung für den Dienst enthalten. Diese zusätzliche Berechtigungsinformation kann über den Dienst-Berechtigungsnachweis bei einer nachfolgenden Anfrage in der Dienstvermittlervorrichtung geprüft werden. Somit ist durch die Registrierungsanfrage und die damit verbundene Vergabe des Dienst-Berechtigungsnachweises eine Verknüpfung der Nutzervorrichtung mit einer Anforderung von Information in der Dienstvermittlervorrichtung gegeben.

In einer vorteilhaften Ausführungsform werden die Registrierungsanfrage und die Antwort auf die Registrierungsanfrage anonym ohne Nutzeridentität zwischen der Anonymisierungsvorrichtung und der Dienstvermittlervorrichtung übermittelt.

Somit ist sichergestellt, dass die Dienstvermittlervorrichtung keine Nutzeridentität oder ähnliche Nutzervorrichtung identifizierende Informationen in den Dienst-Berechtigungsnachweis einkodiert und ebenfalls in der Dienstvermittlervorrichtung selbst keine Zuordnung zwischen dem Dienst-Berechtigungsnachweis und der Nutzervorrichtung erkannt ist. Die Verknüpfung der Nutzervorrichtung mit einer Anforderung von Information in der Dienstvermittlervorrichtung ist somit anonymisiert, also ohne konkreten Hinweis auf die Nutzervorrichtung eingerichtet.

In einer vorteilhaften Ausführungsform erstellt die Anonymisierungsvorrichtung eine Kommunikationsverbindung entsprechend einem virtuellen privaten Netzwerk zur Dienstvermittlervorrichtung und übermittelt die Anfrage oder Antwort über diese Kommunikationsverbindung.

Durch eine solche Kommunikationsverbindung entsprechend einem virtuellen privaten Netzwerk, auch kurz als VPN-Verbindung bezeichnet, wird die Senderidentität bzw. Empfängeridentität durch eine virtuelle Sende- bzw. Empfangsadresse ersetzt und somit die Nutzeridentität aus der Übertragung entfernt. Eine VPN-Kommunikationsverbindung wird ebenfalls zur Übermittlung der Anforderungsnachricht und die Antwort auf die Anforderungsnachricht zwischen der Anonymisierungsvorrichtung und der Dienstvermittlervorrichtung erstellt.

In einer vorteilhaften Ausführungsform enthält der Dienst-Berechtigungsnachweis eine von der Nutzervorrichtung bestimmte zufällige Token-Seriennummer.

Somit kann die Nutzervorrichtung überprüfen, ob die Dienst-Berechtigungsnachweis tatsächlich ihr zugeordnet ist, ohne die Nutzeridentität an die Dienstvermittlervorrichtung bekanntzugeben. Die Dienstvermittlervorrichtung ermittelt dazu eine zufällige Zeichenkette und übermittelt sie bevorzugt mit der Registrierungsanfrage an die Dienstvermittlervorrichtung.

In einer vorteilhaften Ausführungsform wird der Dienst-Berechtigungsnachweis beim Registrieren des Nutzers von der Dienstvermittlervorrichtung signiert und beim Prüfen des Dienst-Berechtigungsnachweises wird in der Anforderungsnachricht nur dann ein positives Prüfergebnis ermittelt, wenn die Signatur des Dienst-Berechtigungsnachweises gültig ist.

Somit kann sichergestellt werden, dass der Dienst-Berechtigungsnachweis und insbesondere Informationen im Dienst-Berechtigungsnachweis bei der Übermittlung nicht verändert werden.

In einer vorteilhaften Ausführungsform wird die Signatur als eine blinde Signatur ausgeführt.

Es gibt für eine Vielzahl von Signierungsprotokollen mit öffentlichen Schlüsseln jeweils Schemata für eine blinde Signatur. Bei einer blinden Signatur wird eine Signatur über den Inhalt einer Datenstruktur erzeugt, ohne dass die signierende Einheit den Inhalt der Datenstruktur kennt. Eine Analogie zu einer solchen kryptografischen bzw. digitalen blinden Signatur ist der physikalische Vorgang bei einer Wahl, bei dem der Wähler den vollständig anonymen Wahlzettel in ein mit einem Durchschlagpapier ausgekleideten Briefumschlag steckt, auf dem die Berechtigungsnachweise des Wählers außen vorgedruckt aufweist. Eine offizielle Person bestätigt diesen Berechtigungsnachweis und signiert den Umschlag, wobei die Signatur des Bestätigenden durch das Durchschlagpapier auf den Wahlzettel im Umschlag übertragen wird. Dieser Brief wird anschließend vom Wähler in einen normalen nicht markierten Umschlag gesteckt und abgegeben. Damit hat der Unterzeichner den Inhalt der Nachricht nicht gesehen, ein Dritter kann aber später die Signatur verifizieren und weiß damit, dass die Signatur gültig ist. Somit wird die Anonymität des Inhalts einer Datenstruktur und hier des DienstBerechtigungsnachweises gewahrt. Die Dienstvermittlervorrichtung kann somit den Dienst-Berechtigungsnachweis signieren, ohne den Inhalt selbst zu kennen.

In einer vorteilhaften Ausführungsform wird zum Dienst-Berechtigungsnachweis ein Berechtigungskonto in der Dienstvermittlervorrichtung geführt und der Dienst-Berechtigungsnachweis abhängig vom Inhalt des Berechtigungskontos als gültig gekennzeichnet.

Durch das Berechtigungskonto wird beispielsweise ein Kontingent an Abfragen bei der Diensterbringervorrichtung für die Nutzervorrichtung verwaltet und Abfragen entsprechend ausgeführt bzw. nicht ausgeführt. Wird beispielsweise beim Prüfen des Dienst-Berechtigungsnachweises einer Anforderungsnachricht die Signatur des Dienstberechtigungsnachweises von der Dienstvermittlervorrichtung als gültig ermittelt, wird im Berechtigungskonto überprüft, ob noch Kontingent für die angeforderten zu überwachenden Objekte vorhanden ist. Ist dies der Fall, werden die entsprechenden Abfragen bei der Diensterbringervorrichtung durchgeführt. Im Berechtigungskonto wird das verbleibende Kontingent entsprechend reduziert. Ist das Kontingent erschöpft wird im Berechtigungskonto der Dienst-Berechtigungsnachweis beispielsweise als "ungültig" oder "verbraucht" markiert.

In einer vorteilhaften Ausführungsform wird die zufällige kryptografische Sicherheitsinformation in vorgegebenen Abständen, insbesondere bei jedem Anfordern der Information, neu generiert.

Somit kann auch aus der kryptografischen Sicherheitsinformation in der Dienstvermittlervorrichtung nicht auf die Nutzeridentität der Nutzervorrichtung geschlossen werden.

In einer vorteilhaften Ausführungsform ist der Dienst ein Schwachstellenanalysedienst, wobei das mindestens eine zu überwachende Objekt eine vorbestimmte Softwarekomponente ist und die Information eine Information in Bezug auf eine Schwachstelle des zu überwachenden Objekts ist.

Ein Schwachstellenanalysedienst liefert eine Information in Bezug auf eine Schwachstelle des zu überwachenden Objekts, hier also einer Softwarekomponente an die Nutzervorrichtung. Durch das beschriebene Verfahren ist in einem solchen Schwachstellenanalysedienst lediglich in der Nutzervorrichtung die Nutzeridentität und die zu überwachenden Objekte bekannt. Eine Zuordnung der Nutzeridentität zu den zu überwachenden Objekten ist weder in der Anonymisierungsvorrichtung noch in der Dienstvermittlervorrichtung und auch nicht in der Diensterbringervorrichtung möglich. Somit kann eine Nutzervorrichtung beispielsweise einen Schwachstellenanalysedienst, der von einer dritten Partei bereitgestellt wird, wenn der Dienst über das beschriebene Verfahren erbracht wird.

In einer vorteilhaften Ausführungsform werden Anforderungen von mindestens zwei unterschiedlichen Nutzern in der Dienstvermittlervorrichtung gesammelt und die angeforderte Information in einer einzigen Anfrage bei einer Diensterbringervorrichtung abgerufen.

Dies reduziert den Aufwand bezüglich Prozessorkapazität und Übertragungsbandbreite in der Dienstvermittlervorrichtung und der Diensterbringervorrichtung. Des Weiteren wird durch das Aggregieren der Anfrage auch die Zuordnung der zu überwachenden Objekte mit der Nutzervorrichtung verschleiert.

Ein zweiter Aspekt der Erfindung betrifft eine Dienstvermittlervorrichtung zum anonymisierten Bereitstellen eines Dienstes, die mindestens einen Prozessor aufweist und derart ausgebildet ist,
- eine Anforderung einer Information zu zumindest einem zu überwachenden Objekt durch eine Nutzervorrichtung mittels einer Anforderungsnachricht, die die Nutzeridentität des Nutzers, einen Dienst-Berechtigungsnachweis und eine von der Nutzervorrichtung generierte zufällige kryptografische Sicherheitsinformation enthält, von der Anonymisierungsvorrichtung anonym ohne Nutzeridentität zu empfangen,
- den Dienst-Berechtigungsnachweis zu prüfen und bei einem positiven Prüfergebnis,
- die Information bei einer Diensterbringervorrichtung abzurufen,
- die Information mit der kryptografischen Sicherheitsinformation zu verschlüsseln und
- die verschlüsselte Information über die Anonymisierungsvorrichtung an die Nutzervorrichtung zu übermitteln.

Durch die Dienstvermittlervorrichtung wird die angeforderte Information zu den zu überwachenden Objekten empfangen, ohne aus der empfangenen Information einen Rückschluss auf die Nutzervorrichtung, die die Anforderungsnachricht gesendet hat, zu schließen. Somit kann über die Dienstvermittlervorrichtung solche vertraulichen Informationen von unterschiedlichen Nutzervorrichtungen und jeweils unter Wahrung der Anonymität zwischen Nutzervorrichtung und Dienstvermittlervorrichtung die Informationen zu den zu überwachenden Objekten geliefert werden.

In einer vorteilhaften Ausführungsform umfasst die Dienstermittlungsvorrichtung eine Verwaltungseinheit, die derart ausgebildet ist, zu jedem Dienst-Berechtigungsnachweis ein Berechtigungskonto zu führen und den Dienst-Berechtigungsnachweis abhängig vom Inhalt des Berechtigungskontos als gültig zu kennzeichnen.

Dies ermöglicht es, den Zugriff auf die Information und somit die Verfügbarkeit des Dienstes an den Dienst-Berechtigungsnachweis zu binden.

Ein dritter Aspekt der Erfindung betrifft eine Anordnung zum anonymisierten Bereitstellen eines Dienstes, umfassend eine Anonymisierungsvorrichtung, eine Dienstvermittlervorrichtung und eine Diensterbringervorrichtung, die derart ausgebildet sind,
- eine Information zu zumindest einem zu überwachenden Objekt durch eine Nutzervorrichtung bei der Dienstvermittlervorrichtung mittels einer Anforderungsnachricht anzufordern, die die Nutzeridentität des Nutzers, einen Dienst-Berechtigungsnachweis und eine von der Nutzervorrichtung generierte zufällige kryptografische Sicherheitsinformation enthält, und an eine Anonymisierungsvorrichtung zu übermitteln,
- die Anforderungsnachricht zwischen der Anonymisierungsvorrichtung und der Dienstvermittlervorrichtung anonym ohne Nutzeridentität zu übermitteln, den Dienst-Berechtigungsnachweis durch die Dienstvermittlervorrichtung zu prüfen und
- die Information durch die Dienstvermittlervorrichtung bei einer Diensterbringervorrichtung abzurufen,
- die Information mit der kryptografischen Sicherheitsinformation zu verschlüsseln und
- die verschlüsselte Information von der Dienstvermittlervorrichtung über die Anonymisierungsvorrichtung an die Nutzervorrichtung zu übermitteln.

Ein vierter Aspekt der Erfindung betrifft ein Computerprogrammprodukt, umfassend ein nicht flüchtiges computerlesbares Medium, das direkt in einen Speicher eines digitalen Computers ladbar ist umfassend Programmcodeteile, die dazu geeignet sind, die Schritte des Verfahrens durchzuführen.

Sofern es in der nachfolgenden Beschreibung nicht anders angegeben ist, beziehen sich die Begriffe "Anfordern", "Übermitteln", "Prüfen", "Abrufen", Verschlüsseln" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse.

Die jeweilige "Vorrichtung" z. B. Nutzervorrichtung, Dienstvermittlervorrichtung und Diensterbringervorrichtung kann hardwaretechnisch und/oder auch softwaretechnisch implementiert sein. Bei einer hardwaretechnischen Implementierung kann die jeweilige Vorrichtung als eigenständige Vorrichtung oder als Teil einer Vorrichtung, z. B. als Computer oder als Mikroprozessor sein. Bei einer softwaretechnischen Implementierung kann die jeweilige Vorrichtung als Computerprogrammprodukt, als eine Funktion, als eine Routine, als Teil eines Programmcodes oder als ausführbares Objekt ausgebildet sein.

Ein Computerprogrammprodukt kann beispielsweise als Speichermedium, wie z. B. Speicherkarte, USB-Stick, CD-ROM, DVD oder auch in Form einer herunterladbaren Datei von einem Server in einem Netzwerk bereitgestellt und geliefert werden.

Die für das vorgeschlagene Verfahren beschriebenen Ausführungsformen und Merkmale gelten für die vorgeschlagene Anordnung sowie die vorgeschlagene Dienstvermittlervorrichtung entsprechend.

Ausführungsbeispiele des erfindungsgemäßen Verfahrens, der erfindungsgemäßen Dienstvermittlervorrichtung sowie der erfindungsgemäßen Anordnung sind in den Zeichnungen beispielhaft dargestellt und werden anhand der nachfolgenden Beschreibung näher erläutert. Es zeigen:
- Fig. 1: ein Ausführungsbeispiel einer erfindungsgemäßen Anordnung zum anonymisierten Bereitstellen eines Dienstes in schematischer Darstellung;
- Fig. 2: ein Ausführungsbeispiel des erfindungsgemäßen Verfahrens als Flussdiagramm;
- Fig. 3: ein Ausführungsbeispiel des erfindungsgemäßen Verfahrens in Form eines Nachrichtenablaufs; und
- Fig. 4: ein Ausführungsbeispiel der erfindungsgemäßen Dienstvermittlervorrichtung in Blockdarstellung.

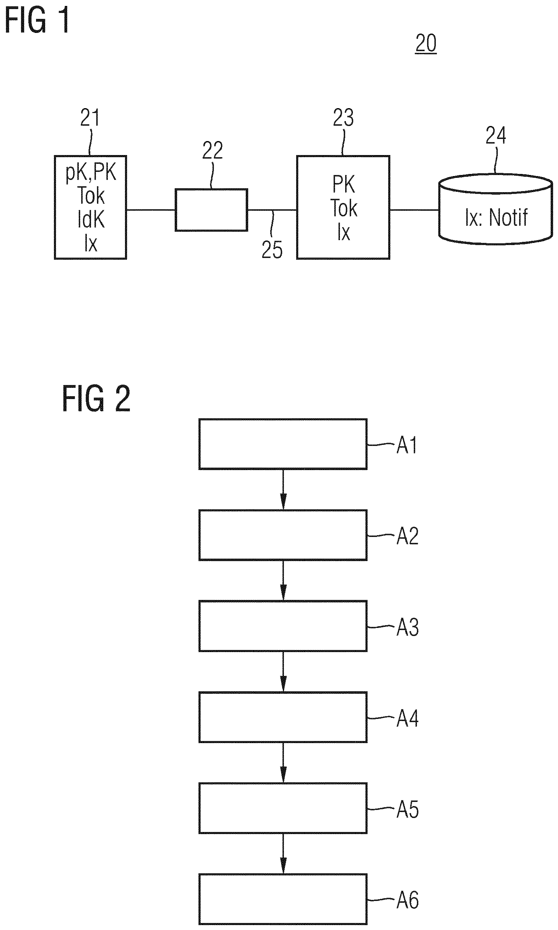

Figur 1 zeigt eine Anordnung 20 zum anonymisierten Bereitstellen eines Dienstes, bei dem ein Nutzer des Dienstes sowie die von dem Nutzer angefragten zu überwachenden Objekte lediglich in der vom Nutzer zum Dienstzugang verwendeten Nutzervorrichtung bekannt sind, in allen anderen Vorrichtungen, die in der Diensterbringung involviert sind, aber keine solche Zuordnung zwischen Nutzer und den zu überwachenden Objekten möglich ist.

Die Anordnung 20 umfasst die Nutzervorrichtung 21, die über eine Anonymisierungsvorrichtung 22 mit einer Dienstvermittlervorrichtung 23 verbunden ist. Die Dienstvermittlervorrichtung 23 wiederum ist mit einer Diensterbringervorrichtung 24 verbunden. Die Vorrichtungen können über eine Kommunikationsverbindung, die entweder direkt oder auch indirekt über ein Datennetzwerk ausgebildet ist, miteinander verbunden sein. Die Diensterbringervorrichtung 24 umfasst eine Datenbank mit Informationen zu Objekten, die von der Nutzervorrichtung 21 als zu überwachende Objekte Ix ausgewählt werden können. Die Information zu den Objekten wird in der Diensterbringervorrichtung 24 dabei regelmäßig aktualisiert. Die Einträge zu den Objekten können beispielsweise durch jeweils einen Zeiger oder einen Verweis gekennzeichnet werden.

Ein Nutzer kann über die Nutzervorrichtung 21 bei der Dienstvermittlervorrichtung 23 registriert werden. kann beispielsweise ein Berechtigungskonto mit einem Nutzungskontingent, beispielsweise eine maximale Anzahl von Abrufen bei der Dienstermittlervorrichtung 24 erstellt werden. Die Registrierung kann auch mit einem Bezahlvorgang, das Nutzungskontingent mit einer pro Abrufen verbundenen Gebühr verbunden sein. Das Berechtigungskonto kann aber auch eine Zeitspanne umfassen, innerhalb der Abfragen durchgeführt und der Nutzervorrichtung übermittelt werden. Die Nutzervorrichtung 21 kann nach einer abgeschlossenen Registrierung Informationen zu einer Anzahl von zu überwachenden Objekten Ix, die beispielsweise durch die Angabe der in der Datenbank der Dienstermittlervorrichtung 24 verwendeten Zeiger oder Verweise gekennzeichnet werden, bei der Dienstvermittlervorrichtung 23 anfordern.

Die Dienstvermittlervorrichtung 23 sendet auf eine solche Anforderung eine Antwort, die die Information über das zu überwachende Objekt in der Datenbank der Diensterbringervorrichtung 24 widerspiegelt. Die Nutzervorrichtung 21 möchte dabei nicht, dass die Dienstvermittlervorrichtung 23 und die Diensterbringervorrichtung 24 weiß, zu welchem Objekt er Informationen sucht. Eine solche Problemstellung wird auch als "1-out-of-n oblivious transfer" bezeichnet.

Die Nutzervorrichtung 21 umfasst mindestens einen Prozessor und ist beispielsweise als ein Computer oder als Teil eines Computers oder eines sonstigen elektronischen Gerätes mit Datenverarbeitungsfähigkeiten ausgebildet. Die Nutzervorrichtung 21 enthält eine kryptografische Einheit, die kryptografisches Material, insbesondere einen öffentlichen Schlüssel PK und einen dazu passenden privaten Schlüssel pK, erzeugen. Die Nutzervorrichtung erzeugt beispielsweise für jedes Anfordern von Information ein neu erzeugtes zufälliges Schlüsselpaar pK, PK. Die Nutzervorrichtung 21 übermittelt den öffentlichen Schlüssel PK in Anforderungsnachrichten oder auch in einer Registrierungsanfrage an die Dienstvermittlervorrichtung 23. Die Dienstvermittlervorrichtung 23 verschlüsselt Antwortnachrichten auf die Anforderungsnachricht oder Registrierungsanfrage mit dem in der jeweiligen Anforderungsnachricht oder Registrierungsanfrage übermittelten öffentlichen Schlüssel PK und sendet die entsprechend verschlüsselte Nachricht an die Nutzervorrichtung 21. Private Schlüssel pK verlassen nie die Nutzervorrichtung 21.

Die Dienstvermittlervorrichtung 23 erzeugt auf eine Registrierungsanfrage von der Nutzervorrichtung 21 einen Dienst-Berechtigungsnachweis Tok und sendet diesen in der Antwort auf die Registrierungsanfrage an die Nutzervorrichtung 21 zurück. Der Dienst-Berechtigungsnachweis Tok ist eine anonyme Bestätigung, dass die Nutzervorrichtung 21, die den Dienst-Berechtigungsnachweis Tok in einer Anforderungsnachricht sendet, berechtigt ist, den Dienst abzurufen. Die Dienstvermittlervorrichtung 23 gibt keine Informationen über die Identität der Nutzervorrichtung 21 an die Diensterbringervorrichtung 24 weiter.

Die Dienstvermittlervorrichtung 23 führt zu jedem Dienst-Berechtigungsnachweis ein Berechtigungskonto, in dem ein Nutzungskontingent über Anforderungen der Nutzervorrichtung 21 oder Abfragen der Dienstvermittlervorrichtung 23 bei der Dienstermittlungsvorrichtung 24 geführt wird und der Dienst-Berechtigungsnachweis Tok abhängig vom Stand des Berechtigungskontos als gültig oder ungültig gekennzeichnet wird. Die Dienstvermittlervorrichtung 23 kann nicht unterscheiden, welcher Dienst-Berechtigungsnachweis Tok zu welcher Nutzervorrichtung 21 bzw. deren Nutzeridentität IdK gehört und kann auch keine Rückschlüsse zu dem Berechtigungskonto machen.

Der Dienst-Berechtigungsnachweis Tok bestätigt, dass die Nutzervorrichtung 21 für den Dienst berechtigt ist. Die Nutzervorrichtung 21 generiert eine zufällig bestimmte eindeutige Seriennummer und übermittelt diese beispielsweise in der Registrierungsanfrage an die Dienstvermittlervorrichtung, die diese Seriennummer in den Dienst-Berechtigungsnachweis Tok einfügt. Der Dienst-Berechtigungsnachweis Tok wird von der Dienstvermittlervorrichtung 23 signiert. Diese Signatur wird zur Ermittlung der Gültigkeit von der Dienstvermittlervorrichtung 23 überprüft.

Damit die Dienstvermittlervorrichtung 23 die Zuordnung zwischen der Nutzervorrichtung 21 und dem Dienst-Berechtigungsnachweis Tok nicht kennt, wird der Dienst-Berechtigungsnachweis Tok mittels einer blinden Signatur von der Dienstvermittlervorrichtung 23 signiert. Beispielsweise kann eine blinde Signatur auf einem RSA (Rivest-Shamir-Adleman)-Kryptoverfahren oder auf einem DSA (Digital Signature Algorithm)-Verfahren basieren. Der Dienst-Berechtigungsnachweis Tok wird anschließend von der Dienstvermittlervorrichtung 23 bei jeder Anforderungsnachricht geprüft und lediglich wenn die Signatur als gültig ermittelt wurde, ruft die Dienstvermittlervorrichtung 23 die entsprechende Information zu den zu überwachenden Objekten Ix bei der Diensterbringungsvorrichtung 24 ab.

Die Nutzervorrichtung 21 erstellt eine Kommunikationsverbindung nicht direkt zur Dienstvermittlervorrichtung 23, sondern zur Anonymisierungsvorrichtung 22. Die Dienstvermittlervorrichtung 23 empfängt die Registrierungsanfrage bzw. die Anforderungsnachricht für Informationen zu einem zu überwachenden Objekt Ix von der Nutzervorrichtung 21 von einem Anonymisierungsvorrichtung 22.

Die Anonymisierungsvorrichtung 22 kann beispielsweise als eine VPN-Vorrichtung 25 ausgebildet sein, die eine Kommunikationsverbindung entsprechend einem virtuellen privaten Netzwerk zur Dienstvermittlervorrichtung 23 erstellt. Die Anonymisierungsvorrichtung 22 übersetzt dabei beispielsweise eine öffentliche IP-Adresse der Nutzervorrichtung 21, die die Nutzeridentität IdK der Nutzervorrichtung 21 kennzeichnet in eine anonyme Adresse, die sich häufig ändert und nicht die Identität IdK der Nutzervorrichtung 21 preisgibt. Die Anonymisierungsvorrichtung 22 kennt nicht den Inhalt der Anfragenachricht oder der Registrierungsanfrage, die die Nutzervorrichtung 21 an die Dienstvermittlervorrichtung 23 sendet und kennt somit nicht die in der Anfragenachricht genannten zu überwachenden Objekte Ix, auf die sich die Anfragenachricht bezieht.

Die Dienstvermittlervorrichtung 23 kann Anforderungsnachrichten von unterschiedlichen Nutzervorrichtungen 21 sammeln und mit lediglich einem Abrufen die Information von der Diensterbringervorrichtung 24 erhalten. Damit wird der Aufwand für die Dienstvermittlervorrichtung 23 reduziert und Synergien genutzt. Zudem wird durch das Aggregieren von Anforderungsnachrichten die Zuordnung der zu überwachenden Objekte Ix zur Nutzervorrichtung 21 verschleiert.

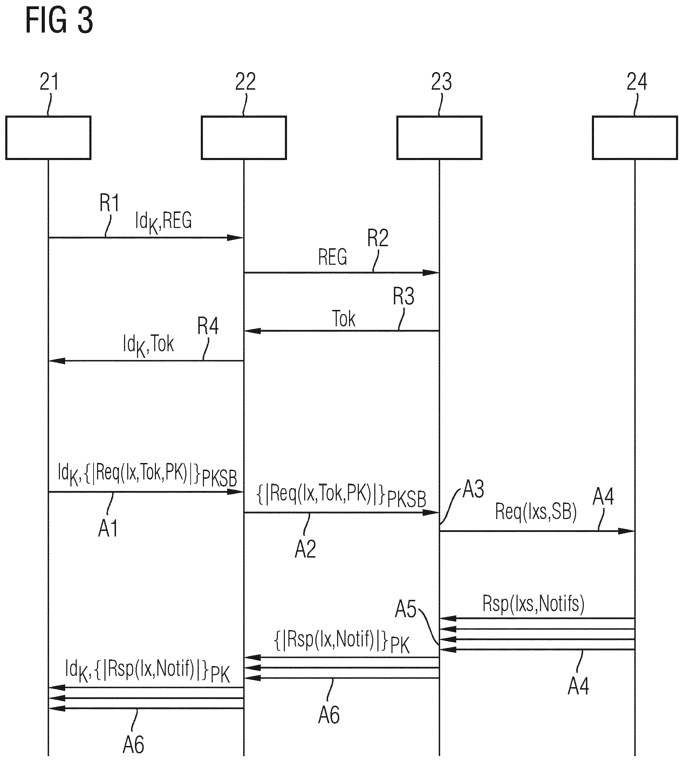

Die in der Anordnung 20 enthaltenen Vorrichtungen sind derart konfiguriert, das im nachfolgenden anhand eines Flussdiagramms in Figur 2 und einem detaillierten beispielhaften Nachrichtenablauf in Figur 3 beschriebene Verfahren durchzuführen.

Figur 2 zeigt einen Nachrichtenablauf, mit dem ein Dienst anonymisiert bereitgestellt werden kann. Ein solcher Dienst kann beispielsweise ein Schwachstellenanalysedienst, im Englischen auch als Software Vulnerability Service bezeichnet, sein, bei dem Information über Schwachstellen wie beispielsweise Sicherheitslücken und ähnliches einer Softwarekomponente an einen Nutzer bereitgestellt werden. Dabei kann eine Anfrage nach Informationen zu einem oder mehreren Softwaremodulen in einer Anforderungsnachricht enthalten sein.

In einem ersten Verfahrensschritt A1 fordert die Nutzervorrichtung 21 Informationen zu zumindest einem zu überwachenden Objekt bei der Dienstvermittlervorrichtung 23 an. Dazu wird eine Anforderungsnachricht, die die Nutzeridentität des Nutzers, den Berechtigungsnachweis Tok und die von der Nutzervorrichtung 21 generierte zufällige kryptografische Sicherheitsinformation, beispielsweise der beschriebene öffentliche Schlüssel PK, an die Anonymisierungsvorrichtung 22 übermittelt. Die Anonymisierungsvorrichtung 22 übermittelt nun anonym die Anforderungsnachricht ohne Nutzeridentität IdK an die Dienstvermittlervorrichtung 23, siehe A2. Dies wird beispielsweise durch den Aufbau einer virtuellen privaten Netzwerkverbindung erreicht.

Anschließend prüft die Dienstvermittlervorrichtung 23 den Dienst-Berechtigungsnachweis Tok, siehe A3, und ruft bei einem positiven Prüfergebnis die Information zu den angefragten zu überwachenden Objekten Ix bei der Diensterbringervorrichtung 24 ab, siehe A4. Die von der Diensterbringervorrichtung 24 erhaltene Information wird anschließend in der Dienstvermittlervorrichtung 23 mit der kryptografischen Sicherheitsinformation verschlüsselt, siehe A5, und von der Dienstvermittlervorrichtung 23 über die Anonymisierungsvorrichtung 22 an die Nutzervorrichtung 21 übermittelt, siehe A6.

Figur 3 zeigt nun eine mögliche Abfolge von Nachrichten, um den Dienst durch die Nutzervorrichtung 21, die Anonymisierungsvorrichtung 22, die Dienstvermittlervorrichtung 23 und die Diensterbringervorrichtung 24 bereitzustellen.

Vor einem ersten Anfordern von Informationen registriert sich die Nutzervorrichtung 21 bei der Dienstvermittlervorrichtung 23. Dazu wird eine Registrierungsanfrage REG mit der Nutzerkennung IdK erzeugt und an die Dienstermittlervorrichtung 23 adressiert. Die Nutzervorrichtung 21 übermittelt die Registrierungsanfrage REG an die Anonymisierungsvorrichtung 22, siehe R1. Die Anonymisierungsvorrichtung 22 leitet die Registrierungsanfrage REG anonym, d. h. ohne die Nutzeridentität IdK, an die Dienstvermittlervorrichtung 23 weiter, siehe R2. Dazu wird beispielsweise eine VPN-Verbindung 25 durch die Anonymisierungsvorrichtung 22 aufgebaut. Die Dienstvermittlervorrichtung 23 erzeugt daraufhin einen Dienst-Berechtigungsnachweis Tok als Antwort auf die Registrierungsanfrage. Eine von der Nutzervorrichtung 21 bestimmte zufällige Token-Seriennummer wird in den Dienst-Berechtigungsnachweis eingefügt und in der Dienstvermittlervorrichtung 23 zur Erstellung und Führung des Berechtigungskontos verwendet.

Damit der Dienstermittler 23 den Berechtigungsnachweis der Nutzervorrichtung 21 nicht zuordnen kann, wird der Dienst-Berechtigungsnachweis Tok mittels einer blinden Signatur von der Dienstvermittlungsvorrichtung 23 signiert und anschließend über die Anonymisierungsvorrichtung 22 an die Nutzervorrichtung 21 übermittelt, siehe R3, R4. Damit ist die Registrierung der Nutzervorrichtung 21 abgeschlossen. Die Registrierung kann lediglich einmal durchgeführt werden und für eine über das Berechtigungskonto gesteuerte Anzahl von nachfolgenden Dienstanforderungen gültig sein. Es kann aber auch vor jedem Anfordern des Dienstes eine erneute Registrierung durchgeführt werden.

Zum Anfordern des Dientes erzeugt die Nutzervorrichtung 21 eine zufällige Sicherheitsinformation, beispielsweise einen privaten pK und zugehörigen öffentlichen Schlüssel PK und sendet eine Anforderungsnachricht Req an die Dienstvermittlervorrichtung 23. Die Anforderungsnachricht Req enthält jeweils eine Kennung von jedem zu überwachenden Objekt Ix, den Dienst-Berechtigungsnachweis Tok und die generierte zufällige Sicherheitsinformation PK. Die Anforderungsnachricht Req wird dabei mit dem öffentlichen Schlüssel PKSB der Dienstvermittlervorrichtung 23 signiert. Zusammen mit der Nutzeridentität IdK wird die Anforderungsnachricht Req an die Anonymisierungsvorrichtung 22 übermittelt, siehe A1. Die Anonymisierungsvorrichtung 22 leitet die Anforderungsnachricht Reg an die Dienstvermittlervorrichtung 23, ohne die Nutzeridentität IdK, bspw. eine IP-Adresse, der Nutzervorrichtung 21 weiter, siehe A2.

Die Dienstvermittlervorrichtung 23 überprüft den Dienst-Berechtigungsnachweis Tok, siehe A3 und sendet die Anforderungsnachricht an die Diensterbringervorrichtung 24 mit der Angabe des zu überwachenden Objektes Ix weiter, Siehe A4. Optional sammelt die Dienstvermittlervorrichtung 23 Anfragenachrichten von unterschiedlichen Nutzervorrichtungen 21 und sendet eine einzige Anforderungsnachricht mit den verschiedenen zu überwachenden Objekten Ixs, wobei das "s" die gesammelten Objekte, die angefragt werden, angibt, an die Diensterbringungsvorrichtung 24 weiter. Die Diensterbringervorrichtung 24 beantwortet die Anfrage Reg, indem er eine Antwortnachricht Rsp mit den Informationen Notifs nicht nur die für die Nutzervorrichtung 21 angeforderten Informationen, sondern für weitere Nutzervorrichtungen, die bei der Dienstvermittlervorrichtung 23 registriert sind an die Dienstvermittlungsvorrichtung 23 zurücksendet, siehe A4.

Die Dienstvermittlervorrichtung 23 beantwortet die Anfrage der Nutzervorrichtung 21 mittels einer Antwortnachricht Rsp, die beispielsweise die Kennung der zu überwachenden Objekte Ix sowie die dazugehörige abgerufene Information Notif enthält. Die Antwortnachricht Rsp wird nun mit der Sicherheitsinformation, beispielsweise dem öffentlichen Schlüssel PK der Nutzervorrichtung 21 verschlüsselt, siehe A5 und somit ohne Kenntnis der tatsächlichen Nutzeridentität durch die Dienstvermittlervorrichtung 23 über die Anonymisierungsvorrichtung 22 an die Nutzervorrichtung 21 übermittelt, siehe A6.

Die Anonymisierungsvorrichtung 22 und die Dienstvermittlervorrichtung 23 können die Antwortnachricht Rsp der entsprechenden Anforderungsnachricht Reg zuordnen und darüber an die richtige Nutzervorrichtung 21 weiterleiten. Dies ist beispielsweise bei der Verwendung einer VPN-Verbindung und einer entsprechenden VPN-Funktionalität in der Anonymisierungsvorrichtung 22 der Fall. Die Dienstvermittlervorrichtung 23 kann eine zusätzliche Bezeichnung für die Nutzervorrichtung 21 verwalten, beispielsweise eine Nutzernummer Kn, die die wahre Identität der Nutzervorrichtung 21 vor der Dienstvermittlervorrichtung 23 verheimlicht. Als zusätzliche Bezeichnung für den Kunden kann auch die Sicherheitsinformation PK dafür verwendet werden. Die Dienstvermittlervorrichtung 23 kennt und bestimmt die Zuordnung zwischen der Nutzernummer Kn und der Identität IdK der Nutzervorrichtung 21. Die Nutzernummer Kn wird von der Dienstvermittlervorrichtung 23 generiert und eigenständig verwaltet. Die Dienstvermittlervorrichtung 23 kann sie jederzeit ändern oder einem anderen Kunden zuordnen.

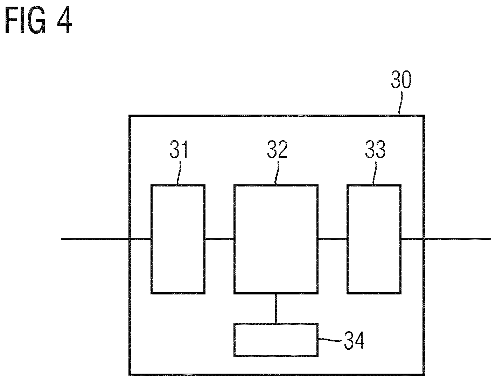

Figur 4 zeigt nun ein Ausführungsbeispiel einer Dienstvermittlervorrichtung 30. Diese umfasst eine Nutzerschnittstelle 31, eine Steuerungseinheit 32, eine Diensterbringerschnittstelle 33 sowie eine Verwaltungseinheit 34. Die genannten Einheiten sind physikalisch auf einem oder mehreren Prozessoren und elektronischen Bauteilen realisiert. Die Nutzerschnittstelle 31 ist derart ausgebildet, eine Anforderung zu umindestens einem zu überwachenden Objekt Ix von der Nutzervorrichtung 21 bzw. der zwischen der Nutzervorrichtung 21 und der Dienstvermittlervorrichtung 23 angeordneten Anonymisierungsvorrichtung 22 zu empfangen. Die Nutzerschnittstelle 31 ist des Weiteren derart ausgebildet, die von der Diensterbringervorrichtung 24 über die Diensterbringerschnittstelle 33 empfangene Information Notif zu verschlüsseln und die verschlüsselte Information Notif über die Anonymisierungsvorrichtung 22 an die Nutzervorrichtung 21 zu übermitteln.

Die Steuerungseinrichtung 32 ist derart ausgebildet, den Dienst-Berechtigungsnachweis Tok zu prüfen und bei einem positiven Prüfergebnis eine Information zu dem zu überwachenden Objekt Ix bei der Diensterbringervorrichtung abzurufen. Eine entsprechende Nachricht wird über die Diensterbringerschnittstelle 33 an die Diensterbringervorrichtung 24 ausgegeben.

Die Dienstvermittlervorrichtung 30 umfasst des Weiteren die Verwaltungseinheit 34, die derart ausgebildet ist, zu jedem Dienst-Berechtigungsnachweis Tok ein Berechtigungskonto zu führen und die Dienst-Berechtigungsnachweises abhängig vom Inhalt des Berechtigungskontos als gültig zu kennzeichnen.

Das Verfahren kann insbesondere zur Bereitstellung eines Schwachstellenanalysedienstes eingesetzt werden. Einem solchen Dienst kann beispielsweise bei der Registrierung zur Einrichtung des Benutzerkontos und bei der Vergabe des Dienst-Berechtigungsnachweises Tok ein anonymes Bezahlverfahren verwendet werden. Über das Benutzerkonto und den Dienst-Berechtigungsnachweis kann die Nutzung des Dienstes abgerechnet werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum anonymisierten Bereitstellen eines Dienstes, bei dem Information (Notif) zu mindestens einem zu überwachenden Objekt (Ix) von einer Dienstvermittlervorrichtung (23) an eine Nutzervorrichtung (21) übermittelt wird und lediglich die Nutzervorrichtung (21) gleichzeitig eine Nutzeridentität (IdK) und das mindestens eine zu überwachende Objekt (Ix) kennt, umfassend
- Anfordern (A1) der Information (Notif) zu mindestens einem zu überwachenden Objekt (Ix) durch die Nutzervorrichtung (21) bei der Dienstvermittlervorrichtung (23) mittels einer Anforderungsnachricht, die die Nutzeridentität (IdK) des Nutzers (K), einen Dienst-Berechtigungsnachweis (Tok) und eine von der Nutzervorrichtung (21) generierte zufällige kryptografische Sicherheitsinformation (PK) enthält und an eine Anonymisierungsvorrichtung (22) übermittelt wird,
- Anonymes Übermitteln (A2) der Anforderungsnachricht ohne Nutzeridentität von der Anonymisierungsvorrichtung (22) an die Dienstvermittlervorrichtung (23),
- Prüfen (A3) des Dienst-Berechtigungsnachweises (Tok) durch die Dienstvermittlervorrichtung (23), und bei einem positiven Prüfergebnis,
- Abrufen (A4) der Information (Notif) durch die Dienstvermittlervorrichtung (23) bei einer Diensterbringervorrichtung (24),
- Verschlüsseln (A5) der Information (Notif) mit der kryptografischen Sicherheitsinformation (PK) und
- Übermitteln (A6) der verschlüsselten Information (Notif) von der Dienstvermittlervorrichtung (23) über die Anonymisierungsvorrichtung (22) an die Nutzervorrichtung (21).

2. Verfahren nach Anspruch 1, wobei der Dienst-Berechtigungsnachweis (Tok) als Antwort auf eine Registrierungsanfrage (Reg) der Nutzervorrichtung (21) von der Dienstvermittlervorrichtung (23) erzeugt und an die Nutzervorrichtung (21) übermittelt wird.

3. Verfahren nach Anspruch 2, wobei
die Registrierungsanfrage (Reg) und die Antwort auf die Registrierungsanfrage (Reg) anonym ohne Nutzeridentität zwischen der Anonymisierungsvorrichtung (22) und der Dienstvermittlervorrichtung (23) übermittelt werden.

4. Verfahren nach einem der vorangehenden Ansprüche, wobei die Anonymisierungsvorrichtung (22) eine Kommunikationsverbindung (24) entsprechend einem virtuellen privaten Netzwerk zur Dienstvermittlervorrichtung (23) erstellt und die zu übertragende Anfrage oder Antwort über die Kommunikationsverbindung übermittelt.

5. Verfahren nach einem der vorangehenden Ansprüche, wobei der Dienst-Berechtigungsnachweis (Tok) eine von der Nutzervorrichtung (21) bestimmte zufällig Token-Seriennummer enthält.

6. Verfahren nach einem der vorangehenden Ansprüche, wobei der Dienst-Berechtigungsnachweis (Tok) beim Registrieren des Nutzers (21) von der Dienstvermittlervorrichtung (23) digital signiert wird, und beim Prüfen des DienstBerechtigungsnachweises (Tok) in der Anforderungsnachricht nur dann ein positives Prüfergebnis ermittelt wird, wenn die Signatur des Dienst-Berechtigungsnachweises (Tok) gültig ist.

7. Verfahren nach Anspruch 6, wobei die Signatur als eine blinde Signatur ausgeführt wird.

8. Verfahren nach Anspruch 6 oder 7, wobei zum Dienst-Berechtigungsnachweis (Tok) ein Berechtigungskonto in der Dienstvermittlervorrichtung (23) geführt wird, und der Dienst-Berechtigungsnachweis abhängig vom Inhalt des Berechtigungs-kontos als gültig gekennzeichnet wird.

9. Verfahren nach einem der vorangehenden Ansprüche, wobei die zufällige kryptografische Sicherheitsinformation (PK) in vorgegebenen Abständen, insbesondere bei jedem Anfordern der Information (Notif), neu generiert wird.

10. Verfahren nach einem der vorangehenden Ansprüche, wobei Anforderungen von mindestens zwei unterschiedlichen Nutzern in der Dienstvermittlervorrichtung (23) gesammelt und die angeforderte Information (Notif) in einer einzigen Anfrage bei einer Diensterbringervorrichtung (24) abgerufen werden.

11. Verfahren nach einem der vorangehenden Ansprüche, wobei der Dienst ein Schwachstellenanalysedienst ist, das mindestens eine zu überwachende Objekt (Ix) eine vorbestimmte Software-Komponente ist und die Information (Notif) eine Information in Bezug auf eine Schwachstelle des zu überwachenden Objekts (Ix) ist.

12. Dienstvermittlervorrichtung (23, 30) zum anonymisierten Bereitstellen eines Dienstes, die mindestens einen Prozessor aufweist und derart ausgebildet ist
- eine Anforderung einer Information (Notif) zu mindestens einem zu überwachenden Objekt (Ix) durch eine Nutzervorrichtung (21) mittels einer Anforderungsnachricht, die die Nutzeridentität (IdK) des Nutzers (K), einen Dienst-Berechtigungsnachweis (Tok) und eine von der Nutzervorrichtung (21) generierte zufällig kryptografische Sicherheitsinformation (PK) enthält, von der Anonymisierungsvorrichtung (22) anonym ohne Nutzeridentität zu empfangen,
- den Dienst-Berechtigungsnachweises (Tok) zu prüfen, und, bei einem positiven Prüfergebnis,
- die Information (Notif) bei einer Diensterbringervorrichtung (24) abzurufen,
- die Information (Notif) mit der kryptografischen Sicherheitsinformation (PK) zu verschlüsseln und
- die verschlüsselte Information (Notif) über die Anonymisierungsvorrichtung (22) an die Nutzervorrichtung (21) zu übermitteln.

13. Dienstermittlervorrichtung (23, 30) nach Anspruch 12, umfassend eine Verwaltungseinheit (35), die derart ausgebildet ist zu jedem Dienst-Berechtigungsnachweises (Tok) ein Berechtigungskonto zu führen, und den Dienst-Berechtigungsnachweis (Tok) abhängig vom Inhalt des Berechtigungskontos als gültig zu kennzeichnen.

14. Anordnung zum anonymisierten Bereitstellen eines Dienstes, umfassend eine Anonymisierungsvorrichtung, eine Nutzervorrichtung, eine Dienstermittlervorrichtung (23) und eine Diensterbringervorrichtung (24), die derart ausgebildet sind,
- eine Information (Notif) zu mindestens einem zu überwachenden Objekt (Ix) durch die Nutzervorrichtung (21) bei der Dienstvermittlervorrichtung (23) mittels einer Anforderungsnachricht anzufordern, die die Nutzeridentität (IdK) des Nutzers (K), einen Dienst-Berechtigungsnachweis (Tok) und eine von der Nutzervorrichtung (21) generierte zufällige kryptografische Sicherheitsinformation (PK) enthält, und an eine Anonymisierungsvorrichtung (22) zu übermitteln,
- die Anforderungsnachricht zwischen der Anonymisierungsvorrichtung (22) und der Dienstvermittlervorrichtung (23) anonym ohne Nutzeridentität zu übermitteln,
- den Dienst-Berechtigungsnachweises (Tok) durch die Dienstvermittlervorrichtung (23) zu prüfen, und, bei einem positiven Prüfergebnis,
- die Information (Notif) durch die Dienstvermittlervorrichtung (23) bei einer Diensterbringervorrichtung (24) abzurufen,
- die Information (Notif) mit der kryptografischen Sicherheitsinformation (PK) zu verschlüsseln und
- die verschlüsselte Information (Notif) von der Dienstvermittlervorrichtung (23) über die Anonymisierungsvorrichtung (22) an die Nutzervorrichtung (21) zu übermitteln.

15. Computerprogrammprodukt, umfassend ein nicht flüchtiges Computerlesbares Medium, das direkt in einen Speicher eines digitalen Computers ladbar ist, umfassend Programmcodeteile, die dazu geeignet sind, die Schritte des Verfahrens nach einem der Ansprüche 1 bis 11 durchzuführen.
